# EUROPEAN PATENT APPLICATION

(11) **EP 3 623 147 A1**
(43) Date of publication of application: **18.03.2020**
(21) Application number: 19189038.3
(22) Date of filing: 30.07.2019
(51) Int. Cl.: B32B 5/02, B32B 5/18, B32B 7/06, B32B 7/12, B32B 25/06, B32B 25/08, B32B 25/10, B32B 27/06, B32B 27/08, B32B 27/10, B32B 27/12, B32B 27/28, B32B 27/30, B32B 27/32, G09F 1/00

(54) **LABEL STICKER**

(30) Priority: 11.09.2018 TW 107131807
(71) Applicant: Wang Tsai, Chin-Chih, Taipei (TW)
(72) Inventor: Wang Tsai, Chin-Chih, Taipei (TW)
(74) Representative: Rapisardi, Mariacristina

(57) **Abstract**

A label sticker includes a base layer (11); a release layer (12) coated on an upper surface of the base layer (11); a first face material layer (14) with a lower surface which a high-viscosity adhesive layer (13) is coated on or adhered to and the release layer (12) is adhered to through the high-viscosity adhesive layer (13); and a second face material layer (16) with a lower surface which a low-viscosity adhesive layer (15) is coated on and the upper surface of the first face material layer (14) is adhered to through the low-viscosity adhesive layer (15), with the second face material layer (16) corresponding in shape to and having the same area as the first face material layer. Therefore, the use of the label sticker is free of interference from adhesive remnants left over after processing.

## Description

### BACKGROUND OF THE INVENTION

### 1. Field of the Invention

The present disclosure relates to label stickers, and in particular to a label sticker whose use is free of interference from adhesive remnants left over after processing.

### 2. Description of the Related Art

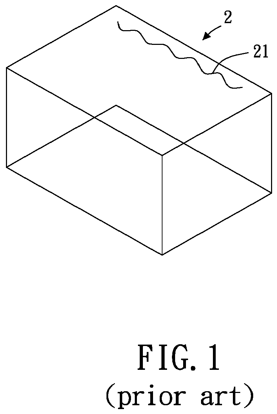

Sticker manufacturers do not apply high strength adhesive to conventional stickers for fear that not only will adhesive remnants be left over on the surfaces of processing machines but also adhesive remnants will be left over on the surfaces of targets after removal of the stickers from the targets. It is only when the conventional label stickers are intended to be adhered to adhesion-resistant targets, such as targets stained with oil, water or dust, and low-temperature target, that the sticker manufacturers do not hesitate to apply high strength adhesive to the conventional stickers. However, during a processing process performed on the conventional label sticker, a cutter cutting conventional endless label sticker which contains high strength adhesive inevitably takes traces of the high strength adhesive. At the end of the cutting process, the leaving cutter inevitably pulls and stretches the traces of high strength adhesive. At a result, adhesive remnants 21 are left over on the surface edge of a label sticker finished product 2, as shown in FIG. 1. In addition, the high strength adhesive on the label sticker finished product is pulled and stretched as soon as the label sticker finished product is pulled to separate from endless processing waste, causing additional adhesive remnants to be left over on the surface edge of the label sticker finished product.

The adhesive remnants left at the surface edge of the label sticker finished product are likely to be stained with dust and dirt and thus render the surface edge of the label sticker finished product dirty to the detriment of the appearance of the label sticker. Furthermore, machines for use in bundling the label sticker finished product or printing ink on the surface of the label sticker finished product are likely to be stained with the adhesive remnants from the surface of the label sticker finished product and thus be subjected to interference from the adhesive remnants to the detriment of the functioning of the machines or printing quality, or even leading to the breakdown of the machines. Furthermore, when the label sticker functions as an insulator for an electric appliance, the adhesive remnants on the surface of the label sticker is also likely to stain the other components. In view of the aforesaid drawbacks, it is important to prevent the adhesive remnants left over after processing from interfering with the use of the label sticker.

### BRIEF SUMMARY OF THE INVENTION

An objective of the present disclosure is to provide a label sticker comprising a base layer; a release layer coated on an upper surface of the base layer; a first face material layer with a lower surface which a high-viscosity adhesive layer is coated on or adhered to and the release layer is adhered to through the high-viscosity adhesive layer; and a second face material layer with a lower surface which a low-viscosity adhesive layer is coated on and the upper surface of the first face material layer is adhered to through the low-viscosity adhesive layer, with the second face material layer corresponding in shape to and having the same area as the first face material layer.

Regarding the label sticker, the second face material layer has a thickness of 0.01 mm∼0.1 mm.

Regarding the label sticker, the low-viscosity adhesive layer has a thickness of 0.01 mm∼0.1 mm.

Regarding the label sticker, the second face material layer is made of one selected from the group consisting of coated paper, Tetoron, and polypropylene synthetic paper.

Regarding the label sticker, the high-viscosity adhesive layer is made of one selected from the group consisting of oil-based acrylic adhesive, water-based acrylic adhesive, and hot-melt adhesive.

Regarding the label sticker, the low-viscosity adhesive layer is made of one selected from the group consisting of oil-based acrylic adhesive, water-based acrylic adhesive, rubber, hot-melt adhesive, and silica gel.

Regarding the label sticker, the second face material layer has a thickness of 0.05 mm.

Regarding the label sticker, the low-viscosity adhesive layer has a thickness of 0.03 mm.

Therefore, the use of the label sticker is free of interference from adhesive remnants left over after processing.

### BRIEF DESCRIPTION OF THE DRAWINGS

FIG. 1 (PRIOR ART) is a schematic view of adhesive remnants left over on a conventional label sticker.
FIG. 2 is a schematic view of the process flow of the production of a label sticker according to an embodiment of the present disclosure.
FIG. 3 is a cross-sectional view of the label sticker according to an embodiment of the present disclosure.

### DETAILED DESCRIPTION OF THE INVETION

To facilitate understanding of the object, characteristics and effects of this present disclosure, embodiments together with the attached drawings for the detailed description of the present disclosure are provided.

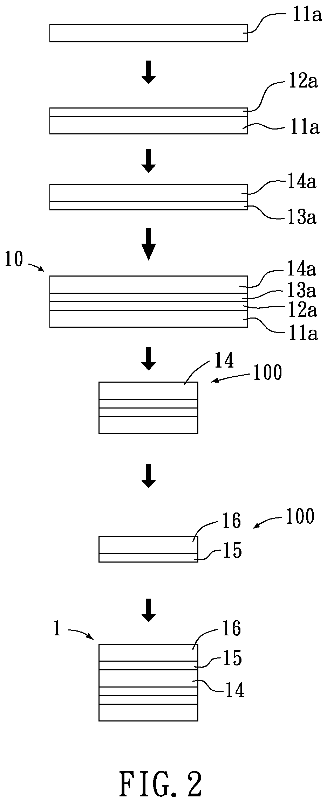

An embodiment of the present disclosure provides a label sticker 1. Referring to FIG. 2, there is shown a schematic view of the process flow of the production of the label sticker 1.

An endless base layer 11a is provided. An endless release layer 12a is coated to the upper surface of the endless base layer 11a. Then, an endless first face material layer 14a is provided. A high-viscosity adhesive 13a is coated to the lower surface of the endless first face material layer 14a. The lower surface of the endless first face material layer 14a is adhered to the endless release layer 12a such that the endless base layer 11a, the endless release layer 12a, the high-viscosity adhesive 13a and the endless first face material layer 14a together form an endless sticker plate 10. Next, the endless sticker plate 10 is cut with a cutter (not shown). After that, the endless waste (not shown) is pulled upward from the cut endless sticker plate 10, so as to produce a plurality of sticker structures 100. The sticker structures 100 have the same drawback as the conventional label sticker described above, that is, the cutter takes traces of the high-viscosity adhesive 13a during the cutting process, pulls adhesive remnants of the high-viscosity adhesive 13a from the endless sticker plate 10 while leaving the endless sticker plate 10, and leaves the adhesive remnants at the upper surface edge of the first face material layer 14 of the sticker structure 100.

In this embodiment, to prevent the adhesive remnants left at the upper surface edge of the first face material layer 14 of the sticker structure 100 from interfering with the use of the label sticker, the upper surface of the first face material layer 14 of the sticker structure 100 is covered with a second face material layer 16 such that the adhesive remnants left at the upper surface edge of the first face material layer 14 of the sticker structure 100 are covered with the second face material layer 16, so as to prevent the adhesive remnants left at the upper surface edge of the first face material layer 14 of the sticker structure 100 from interfering with the use of the label sticker 1 finished product. The process of covering the upper surface of the first face material layer 14 of the sticker structure 100 with the second face material layer 16 is described below.

First, coat the low-viscosity adhesive on the lower surface of the second face material layer 16 of the sticker structure 100 to form a low-viscosity adhesive layer 15. Then, adhere the lower surface of the second face material layer 16 to the upper surface of the first face material layer 14 of the sticker structure 100. The second face material layer 16 corresponds in shape to and has the same area as the sticker structure 100. At this point in time, the production of the label sticker 1 in this embodiment is done. After that, the label sticker 1 may undergo a printing process, for example, printing ink onto the second face material layer 16 of the label sticker 1 or printing ribbon or carbon powder onto the second face material layer 16 of the label sticker 1. Hence, the label sticker 1 can function as an identification label, advertisement label or insulation label. However, the label sticker 1 may also undergo any other processing process as needed and thus is not limited to this embodiment.

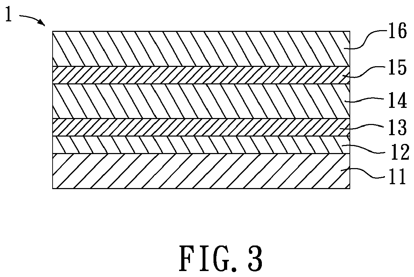

Referring to FIG. 3, the label sticker 1 comprises a base layer 11, a release layer 12, a high-viscosity adhesive layer 13, a first face material layer 14, a low-viscosity adhesive layer 15 and a second face material layer 16. The release layer 12 is coated on the upper surface of the base layer 11. The lower surface of the first face material layer 14 is coated with the high-viscosity adhesive layer 13. The lower surface of the first face material layer 14 adheres to the release layer 12 through the high-viscosity adhesive layer 13. The lower surface of the second face material layer 16 is coated with the low-viscosity adhesive layer 15. The lower surface of the second face material layer 16 adheres to the upper surface of the first face material layer 14 through the low-viscosity adhesive layer 15. The second face material layer 16 corresponds in shape to and has the same area as the first face material layer 14, allowing the second face material layer 16 to cover the upper surface edge of the first face material layer 14.

The aforesaid technical feature "the second face material layer 16 has the same area as the first face material layer 14" means that the second face material layer 16 has substantially the same area as the first face material layer 14. It is possible that, owing to tolerance or production need, the area of the second face material layer 16 is slightly greater than the area of the first face material layer 14, and thus in the naked eye the surface edge of the second face material layer 16 protrudes from the surface edge border of the first face material layer 14 not in a conspicuous manner. In the aforesaid situation, it is deemed that the second face material layer 16 and the first face material layer 14 have the same area.

During the production process of the label sticker 1, the adhesive remnants of the high-viscosity adhesive are likely to stain the upper surface edge of the first face material layer 14; hence, with the first face material layer 14 being covered with the second face material layer 16, the adhesive remnants which stain the upper surface edge of the first face material layer 14 are also covered with the second face material layer 16. Hence, the use of the label sticker 1, for example, adhering the label sticker 1 to an object to serve as a recognition identifier or performing a printing process on the surface of the label sticker 1, is free of interference from adhesive remnants left over after processing.

In this embodiment, the second face material layer 16 has a thickness of 0.05 mm. In another embodiment, the second face material layer has a thickness of 0.01 mm ∼ 0.1 mm or any other thickness as needed. But the present invention is not limited thereto. In a variant embodiment, the first face material layer 14 has the same thickness as the second face material layer 16 or has any other thickness as needed.

In this embodiment, the low-viscosity adhesive layer 15 has a thickness of 0.03 mm. In another embodiment, the low-viscosity adhesive layer 15 has a thickness of 0.01 mm ∼ 0.1 mm or any other thickness as needed. But the present invention is not limited thereto. In a variant embodiment, the high-viscosity adhesive layer 13 has the same thickness as the low-viscosity adhesive layer 15 or any other thickness as needed.

In this embodiment, the base layer 11 is made of Glassine. In another embodiment, the base layer 11 is made of any known material which can combine with the release layer 12. In this embodiment, the release layer 12 is made of silicone. In yet another embodiment, the base layer 11 and the release layer 12 are made of polyethylene film release paper.

The first face material layer 14 and the second face material layer 16 are made of Tetoron, i.e., polyester fiber. However, in another embodiment, the first face material layer 14 and the second face material layer 16 are made of coated paper, Tetoron, polypropylene synthetic paper, or any known material suitable for carrying an adhesive.

In this embodiment, the high-viscosity adhesive is an adhesive with viscosity greater than 2 Pa.s or an adhesive which can be firmly attached to an adhesion-resistant object. In this embodiment, the high-viscosity adhesive may also be an adhesive with higher viscosity than the low-viscosity adhesive layer. The high-viscosity adhesive layer 13 is made of oil-based acrylic adhesive. In another embodiment, the high-viscosity adhesive layer 13 is made of water-based acrylic adhesive, hot-melt adhesive, silica gel or any known material for use in high-viscosity adhesive. In this embodiment, the lower surface of the first face material layer 14 is coated with an adhesive to form the high-viscosity adhesive layer 13, and thus the high-viscosity adhesive layer 13 can adhere to the lower surface of the first face material layer 14. In another embodiment, the high-viscosity adhesive layer 13 is an adhesive film (the adhesive film is carried by polyethylene terephthalate (PET) matrix or foam matrix). The high-viscosity adhesive layer 13 provided in the form of adhesive film is adhered to the lower surface of the first face material layer 14, and thus the high-viscosity adhesive layer 13 is attached to the lower surface of the first face material layer 14.

In this embodiment, the low-viscosity adhesive is an adhesive with viscosity less than 2 Pa.s or an adhesive which can be easily removed from an object otherwise attached to the adhesive. In this embodiment, the low-viscosity adhesive is an adhesive with lesser viscosity than the high-viscosity adhesive layer. The low-viscosity adhesive layer 15 is made of water-based acrylic adhesive. In embodiment, the low-viscosity adhesive layer 15 is made of oil-based acrylic adhesive, silica gel, rubber, hot-melt adhesive, or any known material for use in the low-viscosity adhesive. However, the present invention is not limited to the aforesaid embodiments.

Regarding the label sticker, the first face material layer is covered with the second face material layer, and thus the adhesive remnants which stain the upper surface edge of the first face material layer are also covered with the second face material layer. Hence, the subsequent use of the label sticker is free of interference from adhesive remnants left over after processing.

While the present disclosure has been described by means of specific embodiments, numerous modifications and variations could be made thereto by those skilled in the art without departing from the scope and spirit of the present disclosure set forth in the claims.

## Claims

1. A label sticker, comprising:
a base layer (11);
a release layer (12) coated on an upper surface of the base layer (11);
a first face material layer (14) with a lower surface which a high-viscosity adhesive layer (13) is coated on or adhered to and the release layer (12) is adhered to through the high-viscosity adhesive layer (13); and
a second face material layer (16) with a lower surface which a low-viscosity adhesive layer (15) is coated on and the upper surface of the first face material layer (14) is adhered to through the low-viscosity adhesive layer (15), with the second face material layer (16) corresponding in shape to and having the same area as the first face material layer (14).

2. The label sticker of claim 1, wherein the second face material layer (16) has a thickness of 0.01 mm ∼ 0.1 mm.

3. The label sticker of claim 1, wherein the low-viscosity adhesive layer (15) has a thickness of 0.01 mm ∼ 0.1 mm.

4. The label sticker of claim 1, wherein the second face material layer (16) is made of one selected from the group consisting of coated paper, Tetoron, and polypropylene synthetic paper.

5. The label sticker of claim 1, wherein the high-viscosity adhesive layer (13) is made of one selected from the group consisting of oil-based acrylic adhesive, water-based acrylic adhesive, and hot-melt adhesive.

6. The label sticker of claim 1, wherein the low-viscosity adhesive layer (15) is made of one selected from the group consisting of oil-based acrylic adhesive, water-based acrylic adhesive, rubber, hot-melt adhesive, and silica gel.

7. The label sticker of claim 2, wherein the second face material layer (16) has a thickness of 0.05 mm.

8. The label sticker of claim 3, wherein the low-viscosity adhesive layer (15) has a thickness of 0.03 mm.
